# EUROPEAN PATENT APPLICATION

(11) **EP 3 951 190 A1**
(43) Date of publication of application: **09.02.2022**
(21) Application number: 20189629.7
(22) Date of filing: 05.08.2020
(51) Int. Cl.: F16B 7/04, F16B 21/09, F16B 2/22, F16B 4/00

(54) **MODULAR CONNECTING ELEMENTS FOR A CONNECTING DEVICE AND METHOD FOR ASSEMBLY**

(71) Applicant: Wille, Hein, 06360 Eze (FR)
(72) Inventor: Wille, Hein, 06360 Eze (FR)
(74) Representative: Nederlandsch Octrooibureau

(57) **Abstract**

A modular connecting device (1) for building two- or three-dimensional spatial objects using elongated construction members (9), the connecting device (1) comprising at least a first connector element (2A, 2B, 3, 11, 14) and a second connector element (2A, 2B, 4, 12, 13, 15), both connector elements shaped for connecting to an exterior or an interior of a respective elongated construction member (9) and for keeping in position relative to the respective elongated construction member by friction.

The first connector element (2A, 2B, 3, 11, 14) includes a resilient first spring part (5) to connect to a first respective elongated member (9), a first coupling part (7,8) and a bridge part (6', 6",6'''), situated between the first spring part (5) and the first coupling part (7,8).

The second connector element (2A, 2B, 4, 12, 13, 15) includes a resilient second spring part (5) to connect to a second respective elongated member (9) and a second coupling part (7,8) shaped for detachable coupling to the first coupling part (7,8). A longitudinal axis of both the first and second coupling parts (7,8) is aligned with each other when coupled.

## Description

### Field of the invention

The invention relates to a modular connecting device for building two- or three-dimensional spatial objects with multiple elongated construction members, the connecting device comprising at least a first connector element and a second connector element, both connector elements having a longitudinal axis and shaped so they can be connected by hand to the exterior or the interior of an elongated construction member and kept in position by frictional arrangement.
In particular the invention relates to connecting devices for connecting together elongate construction members together in hubs, nodes, along the length of the construction members or in any other spatial arrangement.

The construction members are for example tubes that can be placed at any angle with respect to each other, at any place along the length or at the ends of another construction member, so as to form a two-dimensional figure or a three-dimensional object, the tubes preferably being made of an anodized aluminium material.

The invention is further regarding a connecting device in which the connecting device itself is a modular assembly for coupling of two or more connector elements which can be differently or similar shaped. It can be a combination of a plug and a clip shaped connector element, an assembly of two or more plugs shaped connector elements, an assembly of two clip shaped connector elements that are coupled together, or any combinations thereof.
The connecting device provides a coupling between the construction members that can have a fixed orientation, a flexible orientation, be at an adjustable or fixed angle or in the form of a rotatable connection.
The modular connector elements can be coupled together in many different ways that gives a large number of "freedom to build" options for objects created with a construction set according to the invention. Objects can, for example, be a two-dimensional figure or a three-dimensional static and/or kinetic (linkage) object, that are built for the purpose of art, design, engineering, modelling, educational, game, hobby or just for the purpose of having a fun time.

### Background

State of the art construction sets have pre-set connecting devices that do fit together or only in a limited variety of arrays. Often the connecting devices and construction members are designed for building just a one single three dimensional figure.

Some construction sets provide connectors for connecting hollow tubular building members like plastic drinking straws (now forbidden in many countries), all of them having the same internal diameter so they can fit on the same size protrusions or fingers from a central hub of a connecting device.
In case of drinking straws the straw ends are capable of being deformed by hand which enable the straw to receive and clamp on a finger from a connecting piece which is provided with a fixed number of fingers or other connecting protrusions for connecting and holding a straw.

Prior art publication WO9304750A1, and in particular figures 8a and 8b, disclose such a flexible and deformable connector device for elongated tubular plastic drinking straws. The disclosed connector device is integrally moulded and made from a soft flexible resilient material; it has a bendable central body portion and a plurality of individually bendable and deformable fingers (plugs) that extend outwardly from the central body portion and spaced angularly there-around. The fingers are shaped and sized to be slidably engageable with a respective deformable end of an elongate tubular straw, and when engaged, retained therewith by frictional engagement. The connector device is essentially planar when it is in a non-deformed state.
The disadvantage of such a connector is that the amount of fingers is fixed and cannot be varied or adjusted, meaning that if a connector device is provided with four fingers a node of maximal of 4 elongated construction members can be created. If decided to connect only 3 construction members to a connector device that is provided with four fingers, one finger will be left free which is creates a disturbing and messy visual appearance in the object that is created.

These known connectors for construction sets and building toys are for creation of 3D space frame structures, creation of geometric shapes and other 2D and 3D objects; they all have the drawback of inflexibility with regard to how many tubes can be connected to a connecting device as it has a fixed shape and is often made in one piece with a standard number of fingers; this clearly limits the ability to produce different objects with a standard known building set.

The main object of the invention is therefore to create a construction set with connection devices that have a nice appearance, a design look, are adjustable and have always the same number of resilient connector fingers as the number of elongated construction members that need to be connected, according to the need and plans of the person that creates a spatial object from the construction set.
It is another object of the invention to have a connecting device that is modular and adjustable so that it can connect elongated construction members in many different ways and with different axis of freedom, including connecting devices that allows for the creation of static or kinetic (linkage) objects.
It is further an object of the invention to have an inventive connecting device, construction set and assembling method that gives the person maximal freedom to create multiple objects with different shaped connector elements that can be combined with each other in many different ways and to have different type of connecting devices with different functionalities.
It is further another object of the invention to provide a modular connector set which enable a person to quickly and simply interconnect the construction members via the connecting devices by hand and give the person the freedom to build or assembly any 2D figure or any 3D spatial structure, geometric shaped object, rack, support, art object, etc.

### Summary

These objectives are achieved by the modular connecting device for building two- or three-dimensional spatial objects according claim 1, using elongated construction members, the connecting device comprising at least a first connector element and a second connector element, both connector elements shaped for connecting to an exterior or an interior of a respective elongated construction member and kept in position relative to the respective elongated construction member by friction. The first connector element comprises a resilient first spring part to connect to a first respective elongated member, a first coupling part and a bridge part, situated between the first spring part and the first coupling part, the second connector element comprises a resilient second spring part to connect to a second respective elongated member and a second coupling part shaped for detachable coupling to the first coupling part, a longitudinal axis of both the first and second coupling parts being aligned with each other when coupled.

In this way a connecting device can be configured from at least two modular and interconnectable connector elements capable to be connected [by hand] to each other and to elongated construction members in many different ways and under different positions with regard to each other in a static or kinetic way, as will be further explained here in detail.

Preferably the second coupling part of a connector element is a coupling part that is shaped to receive and hold a first coupling part of another connector element, the first coupling part having a shape complementary to the second coupling part.

In a preferred embodiment the first connector element is provided with both a first and a second coupling part, in which the first coupling part is a male coupling part that is connected to the resilient spring part via a flexible or bendable bridge part or alternatively via a bridge part that is rigid and fixed in which case the male coupling part is in a fixed orientation to the rest of the first connector element.
The first connector element can also be provided with a second coupling part which is a female coupling part (in case the first coupling part is of a male type) and which is placed between the fixed or flexible bridge part and the resilient spring part.

Preferably the construction member is a hollow tube and so dimensioned that the resilient spring part of a connector element is held by elastic deformation and friction anywhere on the exterior of the tube or held by friction against the interior within an open end of the tube. The tube can be made of any material like wood or a synthetic, plastic material but is preferable made of an anodized aluminium material.
In the case that the resilient spring part of a connector element has an elongated part that is shaped like a plug or finger, it is preferred that it is provided with an elongated opening over its centerline, on both sides of the opening there is a resilient spring element that is compressible by the fingers of a hand towards the centreline of the elongated plug opening, before the spring part is inserted into a tube end. The opening in the plug can have any shape provided that the walls surrounding the opening are compressible by the fingers of a hand.

The two or more connector elements that are coupled to each other via the coupling parts of each connector element, form together a connecting device. The two connector elements can have a form that is identical or a form that Is different from each other.
In case the forms are identical, each connector element comprises a resilient spring part, a female coupling part, a pin-shaped male coupling part, and a bridge part. The bridge part is either fixed or flexible.

### Brief description of drawings

The connecting device according to the invention will now be described and explained with reference to various embodiments, as illustrated in the accompanying drawings, wherein
Figures 1a, 1b, 1c, 1d, 1e and 1f all illustrate examples of a first connecting device according to the invention in a exploded view with two or more connector elements;
Figures 2a, 2b and 2c illustrate a first connector element with a fixed bridge part in a planar, side and top view according to an embodiment;
Figure 3 illustrates in planar view a first connector element with a flexible bridge part according to an embodiment;
Figure 4 illustrates a first connector element with a spring part that is shaped as a clip according to an embodiment;
Figures 5a, 5b and 5c illustrate in respectively a perspective view, a planar view and a side view another first connector element according to an embodiment;
Figure 6 illustrates in perspective a second connector element that is shaped as a plug provided with a female coupling part according to an embodiment;
Figure 7 illustrates a second connector element that is shaped as a clip with a female coupling part according to an embodiment;
Figure 8 illustrates a second connector element, shaped as a clip with a male coupling part, according to an embodiment;.
Figures 9a and 9b both illustrate in perspective view a first connector element, shaped as a clip with a ball shaped first coupling part according to an embodiment;
Figure 10 illustrates in perspective view a second connector element, shaped as a clip and provided with a socket shaped second coupling part according to an embodiment, and
Figure 11 illustrates in perspective view a connecting device assembled of the first connector element of figure 9a and the second connector element of figure 10.

### Description of embodiments

A connecting device according to the invention is an modular device comprising an assembly of at least two connector elements that are interconnected to each other via their coupling parts.
Each connector element in a connecting device is provided with a resilient spring part that can be clamped onto an exterior or into an interior end of an elongated construction member.
The resilient spring part of a connector element could have different shapes and forms, for example in the shape of a clip with two clamping fingers or an elongated plug shape with has at least a protruding part with a diameter that is compressible by a user.
A spring part in the shape of an elongated plug can have any shape and dimensions but is preferably provided with an opening or slot at the centreline of the spring part, the walls of the slot being compressible towards the centerline so to reduce the diameter of the pug for insert into a tubular construction member.
The plug is held in place by frictional engagement against the internal surface of the tubular construction member. In both cases, the spring member is exerting a force on the construction member and is held in position by engagement friction caused by the elastic deformation and spring forces of the spring part. The dimensions of the spring part in combination with the material selected for it (clip or plug) are chosen so that the connector element can be added and removed by [the fingers of a hand] a user while ensuring enough clamping friction between the spring part and the internal or external surface of the elongated construction member.

Each connector element is further provided with one or two coupling parts that could be a pin-shaped male coupling part or a female coupling part shaped to receive and hold a male coupling part.
Connector elements that are coupled in a connecting device according to the invention can have similar shapes, different shapes or a combination similar and different shapes.

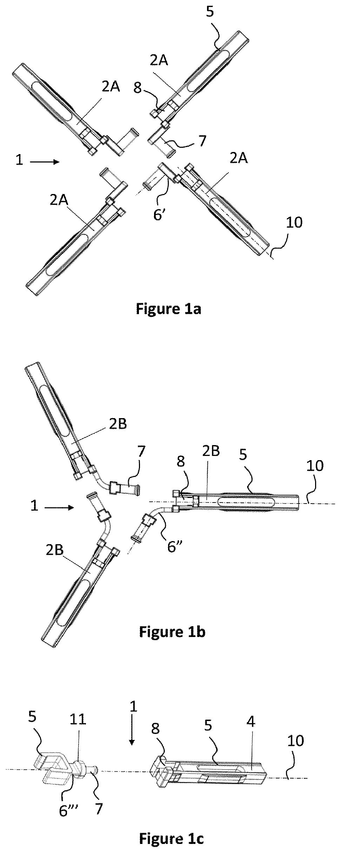

**Figure 1a** shows in an exploded view four first connector elements 2A. The figure shows a collection of four connector element 2A that each are similar shaped. The four first connection elements 2A are all provided with a plug shaped spring part 5 that can be inserted into and removed from an open end of an elongated hollow construction member 9, like an tube.
The four first connector elements 2A are all provided with a male and a female shaped coupling part 7, 8 which will be explained in more detail. The male connecting part 7 is in a fixed position connected via a ridged bridge part 6' to the plug shaped spring part 5. An connector device 1 that is assembled of the four first connector elements 2A as shown in figure 1a, has a plurality of radially projecting connector elements 2A, having an overall star shape as the connecting device is assembled in one plane. The plug shaped spring parts 5 are angularly displaced at 90 degrees from its adjacent first connector element 2A and coplanar therewith.
It is further possible (not shown) to create an connecting device 1 of four connector elements 2A with two perpendicular axis in one plane or for example a 3 dimensional connecting device with 3 perpendicular axes consisting of six connector elements 2A that are all interconnected via their respective couplings parts 7,8.

**Figure 1b** shows an exploded view of another embodiment of an connecting device 1 that can be assembled from and comprises three identically shaped first connector elements 2B with the male coupling part 7 connected to the spring part 5 via a flexible bridge part 6".
The number of (radially) projecting plugs or clips within one connecting device 1 can vary widely and depends on how many connector elements 2B are interconnected via their respective coupling parts 7,8 to each other forming together the connecting device 1. Although only three connector elements 2B are shown in this figure, it will be clear that four, five, six, seven, etc. connector elements 2B can be all interconnected in a similar way via their coupling parts 7,8.
An connector device 1 with the first connector elements 2B of figure 1b will have a plurality of radially projecting connector elements 2B, having an overall star shape when the connector device 1 is in an undeformed assembled condition which is still in one plane, the plug shaped spring parts 5 being angularly displaced from its adjacent first connector element 2B and coplanar therewith, but due to the flexible bridge part 6" the plug shaped spring parts 5 can be bend out of plane in different directions and angles. The flexible bridge part 6" is bendable or deformable to any desired position, independently of the other interconnected connector elements 2B and could be out of the plane of the other plug shaped spring parts 5 due to its flexible design and characteristics.

**Figure 1c** shows in perspective an exploded view of an alternative combination of two connector elements 11,4 that together form a connecting device 1 according to the invention. Here the spring part 5 of the first connector element 11 is shaped like a clip that is connected to a male coupling part 7 via a flexible element 6" and the second connector element 4 has a plug shaped spring part 5 and a female coupling part 8 that is shaped to receive and hold the male coupling part 7 of the first connector element 11.

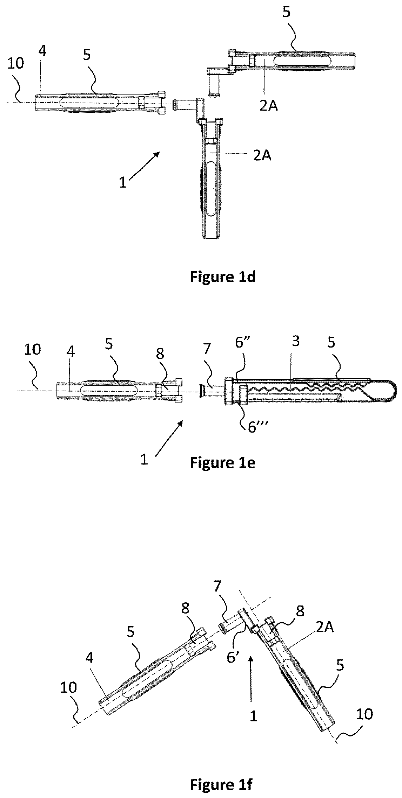

**Figure 1d** shows in an exploded view another embodiment of a connecting device 1 according to the invention, consisting of three plug shaped connector elements. Two of the connector elements are identically shaped first connector elements 2A which have a male coupling part and the third one is a second connector element 4. The two connector elements and connector element 4 can be coupled together via their male or female shaped coupling parts;

**Figures 1e and 1f** both show in an exploded view other embodiments of a connecting device 1 consisting of an first and a second connector element that has different shapes such as an elongated connecting device (Fig. 1e) with adjustable angle or an connecting device with a fixed angle (Fig. 1f).
As can be seen in Figures 1a to 1f the connector elements 2A, 2B, 3, and 4 can have different shapes and forms but are always interconnectable with one or more other connector elements, so to form a connecting device 1 according to the invention.
Many shapes and forms of spring parts 5 are possible (clips, plugs, etc.) that enable a connection of a connecting element to an elongated preferable tubular construction member 9, but in all cases the connection is based on a frictional engagement between them which is a result of a plastic deformation of the spring part 5 that can be added to or removed by hand from a construction member 9.There are also many different ways of couplings, shapes and dimensions possible for the coupling parts 7,8 of the connector elements 2A,2B, 3, 4, provided that the connector elements can be coupled to and decoupled from each other manually. For example a ball-socket coupling, male-female shaped coupling, spigot-socket, quick-release coupling are possibilities.

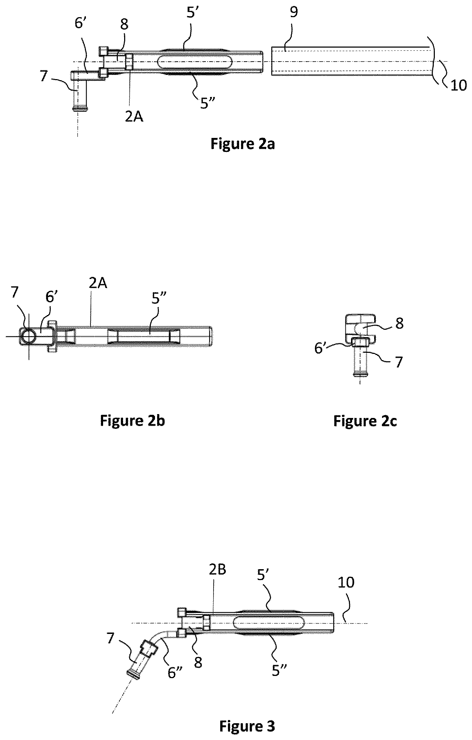

**Figure 2a** discloses in a side view and in detail the embodiment of a first connector element 2A that is shown in figures 1a, 1d and 1f as well as a hollow elongated construction member 9 in the form of a tube.
Figures 2b and 2c shows respectively a side view and a top view of only the connector element 2A of figure 2a. The connector element 2A has an integrated moulded fixed bridge part 6' that is placed between the spring part 5 and the male coupling part 7. As the rigid, fixed bridge part 6' is integrally moulded with the rest of the connector element, the position and orientation of the male shaped coupling part 7 is fixed with regard the longitudinal axis 10 of the connector element 2A and the plug shaped spring part 5.
The axis of the male coupling part 7 is chosen to be perpendicular to the longitudinal axis 10 of the connector element 2A, hence a second connector that is connected via the coupling parts will therefore also be perpendicular to the longitudinal axis 10 of the first connector 2.
As a result the two tubular construction members 9 connected to the plug shaped spring parts 5 will be perpendicular orientated with regard to each other, forming an angle of 90 degrees.
The first connector element 2A shown in figure 2a is provided with both a male shaped first coupling part 7 as well as a complementary female shaped second coupling part 8 capable to receive the male shaped coupling part 7 of another connector element.
The first coupling part 7 comprises a pin shaped part and the second coupling part 8 comprises a counterpart shaped to receive and removable hold the pin shaped part 7. The pin shaped part is at its free end provided with a locking part with a diameter that is larger than the diameter of the elongated pin element. The first coupling part 7 has a longitudinal axis that can be aligned with the longitudinal axis of the second coupling part 8 of a second connector element 4 when they are coupled together to form a connecting device 1.
The female shaped second coupling part 8 of the embodiment shown in Figures 2a and 2c is placed between the bridge part 6 and the spring part 5 of the first connector element 2A.
The female coupling part 8 is provided with an elongated open slot with an U-shaped cross-section as shown in figure 2c, capable to receive a male coupling part 7 from a direction perpendicular to its longitudinal axis. The female coupling part 8 is placed at an end of the resilient spring part 5,near the male coupling part 7.
The plug shaped spring part 5 has a first and a second deformable and resilient spring elements 5', 5", which are the longitudinal wall parts on both sides of the opening slot within the plug. The resilient wall parts 5',5" can be squeezed towards each other by compressive (manual) force and after insertion in the hollow tube of the elongated construction member, are configured to press against the interior surfaces of the construction member 9.
The spring part 5 is shaped and sized so as to be slidably engageable with a respective end of an elongate tubular construction member 9 and, when so engaged, retained by frictional engagement.
Therefore, the elongate tubular construction member 9 preferably has an internal diameter smaller than the external diameter of an non-squeezed spring part 5.
In figure 2a the tube has preferable a rectangular cross section, for example 5 x 5 mm with a wall thickness of for example 0,5 mm.

**Figure 3** discloses the embodiment of a first connector element 1 with an integrated moulded flexible bridge part 6", which is also shown in figure 1b. The flexible bridge part 6" has a circular cross-section and is capable of bending or deforming over multiple axis, so that male coupling part 7 van be orientated in multiple directions.
The flexible part 6" is can be in the form of a film pivot, a heat formed twisted film or an elongated bendable part as shown in Figure 3, is made out of a synthetic plastic material. It forms an integrated part of the first connector element 2B as all parts are moulded integrally of a pliable, resilient plastic material, e.g. Nylon, PP, etc. The resilient and/or pliable characteristics of the synthetic, plastic material are in combination with the correct dimensions and tolerances, essential for a good functioning of the spring part 5, the interconnection of coupling parts 7,8 and the flexible bridge part 6".
As the bridge part 6" is flexible, multiple similar shaped connector elements 2B can be easily interconnected in one plane as Is shown in Figure 1b, so that a star with three, four, five, six, seven, etc. radially extending spring parts 5 (or fingers) can be assembled together via their coupling parts 7,8 into one assembled connecting device 1.
A connecting device 1 assembled from multiple connecting elements 2B according to the embodiment of figure 3, can therefore be used to connect together multiple tubular construction members under any angle due to the adaptable orientation of the flexible bridge part 6".
Such a connecting device 1 can be used as a node of multiple tubular constructing members, each of them capable due to the flexible bridge part 6" to bend bent into an infinite number of angular configurations so that complex spatial objects can create when multiple connecting devices 2B and construction members are used.

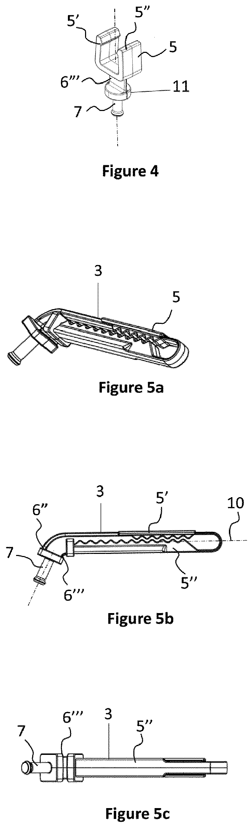

**Figure 4** shows in perspective view another embodiment of a first connector element 11, similar as is shown in Figure 1c; this connector element is provided with a spring part 5 that has the shape of a resilient clip instead of a plug shape.
The resilient spring part or clip 5 is via a flexible film 6" connected to the male coupling part 7 The resilient spring part 5 is in the form of a clip with two clamping fingers or jaws for detachably holding a construction member between the fingers 5', 5" which are capable of applying a clamping friction force on the outer surface of a construction member when it is added to and held between the fingers of the clip 5. A first connector 11 provided with a clip shaped spring part 5, can be clamped at any place along the length on the exterior of a construction member 9.
In another embodiment (not shown) the resilient spring part 5 could have the shape of a clip or another type of clamping device that is provided with a hole for receiving and clamping around the outer surface of an end of a construction member 9 which for example could be a stick or a tube, and hold the end of a construction member 9 in a frictional engagement.

**Figure 5a, 5b and 5c** shows another embodiment of a first connector element in a perspective view, a top view and a side view respectively and is indicated with reference number 3.
This first connector element 3 shown in Figure 5a, 5b, 5c has just one coupling part which is shaped as a male coupling part 7. However, a person skilled in the art will understand that instead of the male coupling part 7 the connector could also be provided with a female coupling part 8. The special shape of first connector element 3 makes it possible when it is for example combined with a second connector element 4 as shown in Figure 1e, to form a connecting device 1 in which the longitudinal axes 10 of the first and second connector elements 3,4 are placed under an angle.
This angle is adjustable and is fixed when the resilient plug spring part 5 is inserted into the end of an tubular construction member 9.
To set the angle of the male coupling part 7 with regard to the longitudinal axis of the plug shaped spring part 5, the sides of the first and second spring elements of the spring part 5 that face each other, are provided with racks or teeth, each provided with multiple similar shaped protrusions and recesses.
The two rack-equipped spring elements 5',5" are normally not in engagement with each other and are displaceable with regard to each other in a longitudinal direction of the spring part 5.
The spring elements 5', 5" equipped with racks are at one end connected to each other via a flexible part that allows for a parallel displacement of the two spring elements with regard to each other and the longitudinal centerline 10, when the racks are not engaged. The flexible part is made from a resilient synthetic material, which functions as a spring part 5 that wants to enlarge the radial distance between them.
At their other end the rack-equipped spring elements 5',5" are connected to the male coupling part 7 (or alternatively a female coupling part) via flexible bridge parts 6", 6"' that are placed at a distance from each other. The flexible bridge parts 6", 6"' are both capable to pivoting and/or flex, preferably around an axis that is perpendicular to the longitudinal axis 10 or the longitudinal axis of each rack-equipped spring element 5',5" of the spring part 5.
As the rack-equipped spring elements 5',5" are connected at two different places 6',6" to the male coupling part 7, the rack-equipped spring elements 5',5" when shifted with regard to each other, will change the heading of the centerline of the coupling part 7 as it will rotate around an axis and makes an angle with the center line 10 of the spring part 5.
Once the preferred angle between the coupling part 7 and the spring part 5 is reached, both rack-equipped spring elements 5',5" still overlap each other and can be engaged with each other by compressing them by hand towards each other. When the rack-equipped spring parts 5',5" are engaged, the angle between the two centrelines will be fixed as show is in in Figure 5b.
In a next step the spring part 5 of the first connector element 3 is inserted into an open end of a tubular construction member with the rack-equipped spring elements 5',5"still engaged with each other. The spring part 5 inserted into an end of a tubular construction member 9 is held in place by friction against the internal surfaces of the construction member while the compressed rack-equipped spring elements 5',5" are still in engagement with each other.
The first connector element 3 of Figure 5a - 5c is preferable integrally moulded as one single piece made from a resilient synthetic material.

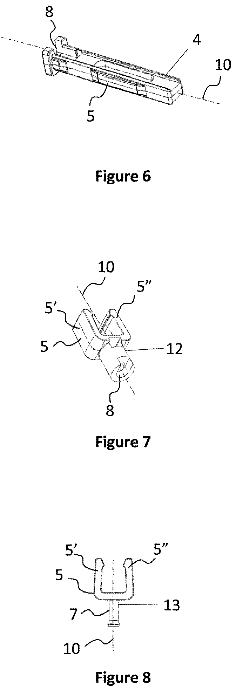

**Figures 6,** 7 **and 8** show various embodiments of a second connector element 4, 12,13 according to the invention.
Although the second connector element can be identical or similar to a first connector element, it can have a more simplified form compared to a first connector element. For example, second connector element 4 shown in Figure 6 is a simplified form of the first connector element 2A, 2B, while second elements 12, 13 that are shown in Figures 7 and 8 respectively, are simplified forms of first connector 11 shown in Figure 4.

**Figure 6** shows in a perspective view a second connector element 4 that is provided with a female coupling part 8 that is placed at an end of the plug shaped compressible spring part 5 that can be inserted into an open end of a tubular construction member.
The female coupling part 8 is capable to receive and hold by friction and/or a locking arrangement a male coupling part 7 of a connector element 2A, 2B, 3,11,13. The first and second connector are assembled together via their respective complementary coupling parts 7,8; the male coupling part 7 of the first connector element can be inserted into the U-shaped receiving opening of a female coupling part 8 of the second connector element 4 in a direction that is transverse (radial) to the longitudinal centreline of the second coupling part 8 so to form together a connecting device 1.
Thereafter the plug shaped spring part 5 is inserted into an end of the construction member; when inserted the coupling parts 7,8 are locked together as the U-shaped opening of the female coupling part 8 is closed by the inner wall of the tubular construction member. The male coupling part 7 is at its free end provided with a locking part that has an enlarged diameter compared with the pin of the male coupling part 7. This locking part fit within a similar enlarged shaped space or opening within the female locking part 8.

**Figure 7** shows an alternative second connector element 12 that has a spring part 5 in the form of a clip with two resilient fingers or clamps 5',5", capable to receive and hold by frictional engagement a construction member between the fingers or clamps.
This second connector element 12 also comprises an integrated moulded female coupling part 8 that is capable to receive and hold by frictional engagement the cylindrical male coupling part 7 of a first connector element 2A, 2B, 3, 11.
The female coupling part 8 of the second connector device 4,12 shown in Figures 6, 7 and in the first connector elements 2A, 2B, are all similar shaped and capable to receive and hold the male coupling part 7 in a locked configuration when inserted into the open end of a tubular construction member 9, as mentioned before.

**Figure 8** shows an alternative embodiment of a second connector element 13 with a clip shaped spring part 5 similar to the one as shown and described in Figure 7, but instead provided with a cylindrical shaped male coupling part 7 with a disk shaped locking element at its free end.
The cylindrical male coupling part 7 is the same as shown in the previous drawings and fit into a complementary shaped female coupling part 8 that is shown for example in the second connector elements 4,12 of Figures 6 and 7, as well in the first connector elements 2A,2B that are shown in figures 1a-1F, 2a-2c and figure 3.
The second connector element 13 can further be provided with a flexible or even a rigid bridge part 6',6",6'" that is placed between the second coupling part 8 and the resilient spring part 5, for example similar as the flexible or rigid bridge part 6',6",6'" of the first connector element 2A, 2B.

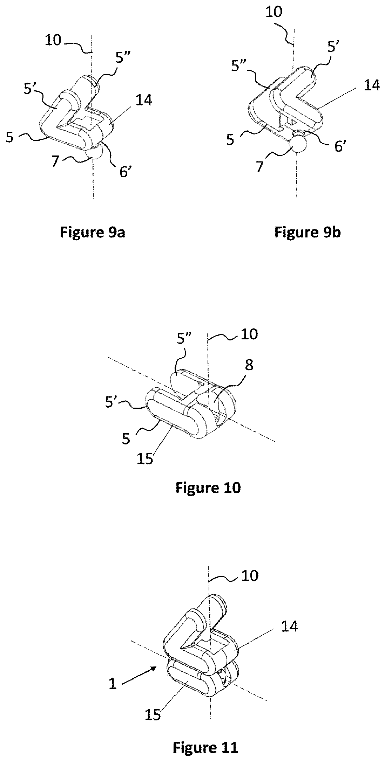

**Figures 9a and 9b** both illustrate in perspective another version of a first connector element 14 now shaped as a clip 5 with a special shape and in which the male connector part 7 has the shape of a ball. The clip part 5 is shaped so it can be clicked at any place on the exterior and along the length of an elongated construction member 9 but it is also shaped to receive an end of an elongated construction member 9 along its longitudinal centreline which is indicated with dotted line 10.
The resilient fingers 5',5" of the clip can hold the elongated construction member 9 in different positions for example in line with the longitudinal centreline 10 of this first connector element 2. The bridge part 6' has a ridged part that connects the ball shaped first coupling part 7 to the resilient spring part 5.

**Figure 10** illustrates in perspective an embodiment of a second connector element 15 in which the resilient spring part 5 is shaped as a clip and which is provided with a receiving second coupling part 8 that has a socket shape. The coupling part 8 is capable to receive and rotatably hold by friction the ball shaped first coupling part 7as described with reference to the embodiment shown in figures 9a and 9b.
The clip of the resilient spring part 5 is shaped so it can be clicked at any place along the exterior and length of an elongated construction member 9 but this shape also allows to receive an end of an elongated construction member that is placed perpendicular (indicated with a dotted line) to its elongated centreline 10.

**Figure 11** illustrates in perspective a connecting device 1 assembled of the first connector element 14 of figures 9a, 9b and the second connector element 15 of figure 10, showing that the longitudinal centrelines 10 of the coupling parts 7,8 are aligned when they are coupled together. Each of the resilient spring parts 5can receive and hold an elongated construction member 9 by friction due to plastic deformation of the resilient spring parts 5.
In the first and second connector elements 14 ,15 of figures 9a, 9b and 10, the height of the resilient fingers 5' and 5" is equal to or slightly larger than the distance between the fingers 5',5". This makes it possible that an assembled first connecting device 1 as shown in figure 11, can be clicked onto another connecting device in different ways as a finger 5',5" of a first connecting device can be added and held in position by clamping it between the two fingers 5',5" of second connecting device in a perpendicular way (not shown).

In each of the illustrated embodiments, the parts of a first or second connector element are integrally moulded of a pliable, resilient plastic material.
Preferably the connector elements are moulded from a resilient plastic or elastomeric material selected from a group comprising Nylon, polyester, polypropylene, rubber, polyurethane, PVC or the like.
The resilient and/or pliable characteristics of the synthetic, plastic material, in combination with the correct dimensions and tolerances are essential for a good functioning of the spring part 5, the flexible parts 6',6",6"' and the interconnection of coupling parts 7,8 of the connector elements, that is to provide suitable frictional engagement.
Due to the ability of each of the spring parts 5, 5', 5" and as well the flexible parts 6",6'" to bend and deform (in different planes) independently of the other, a vast number of different three dimensional spatial objects can be formed when the modular connecting devices 1 are combined with tubular construction members 9.

A connecting device 1 can thus be an assembly of multiple connector elements that are placed under fixed or flexible angles with regard to each other.

The first coupling part 7 and the second coupling part 8 could be any type of known coupling system that has two parts that can be coupled and decoupled by a user by hand.
Both the male and female coupling parts 7,8 can be in different forms and shapes that are known to a person skilled in the art, for example known couplings like pin-hole coupling, ball-socket coupling, etc.
In an preferred embodiment of the invention the first and second connector elements are each provided with at least 1 coupling part 7,8: the first connector elements 2A,2B can be provided with both a male and a female coupling part 7,8. The second (as well as the third and fourth) connector element could be similar shaped connector element as shown in Figures 1a,1b, or has a more simplified shape as shown by the connector elements 4,12,13, which are provided with only 1 coupling part as shown in Figures 6, 7 and 8.
Alternatively, for all embodiments shown, the first coupling part can be of the female receiving type while the second coupling part could be the male type of coupling part or reverse. Depending on the diameter of the tubes to be connected, a connector element can be provided with a plug shape spring part 5 that have a total length in the range of 30-50 mm, to be used for tubes or other elongated construction members, of maximal 250 mm length and an outer diameter of 5 x 5 mm.

As shown in figure 2a a preferred embodiment of an elongated construction member 9 is a hollow tube that is so dimensioned so that the spring part 5 of a first or second connector element 2A, 2B, 3, 4,11,12,13,14,15 can be held by friction on the exterior of the tube via a clip shaped resilient spring part 5 or held by friction against the inner wall of the tube by a plug shaped resilient spring part 5.
The elongate tubular construction members can be made of any material, for example made from synthetic plastic, wooden, metal, etc. and can be in the form of hollow tubes or solid rods. Preferably the construction members are made of anodized aluminium tubes as aluminium is a stiff and light weighted construction material with a good design appearance.
The tubes can have a round, square or any form of cross-sectional profile.
Preferably the tubes have a square cross-section and are provided with a groove or recess on two opposite exterior wall sides, so that the width diameter at the centreline of the tube is smaller than the height diameter perpendicular to the width diameter, forming an upper and lower chamber within the tubular member (a butterfly type of cross-section), this would strengthen and give the construction member a good design and appearance look. This elongated construction member 9 is therefore preferable provided with at least two flat longitudinal side surfaces opposite to each other.
For example for a tubular construction member 9 made of extruded and anodized aluminium material, the length of the tube could be between 80 and 250 mm, with a diameter of 4 - 8 mm for a circular cross-section or a diameter of for example 5 by 5 mm for a square cross-section and a wall thickness of 0,3 - 1,0 mm.

A building set with elongated construction elements 9 and first and second connector elements according to the invention, comprises several elongated construction members of different lengths but all with a similar cross section that is corresponding with the dimensions of the plug and clip shaped spring parts 5 of the connector elements 2A, 2B, 3, 4, 11, 12, 13, 14, 15.

Also a method is claimed for assembling a connecting device according to the invention to connect two or more elongated tubular construction members 9.
The method includes the step of first coupling at least two connector elements 2A, 2B, 3, 4,11,12,13,14,15 together by coupling the first coupling part 7 of a first connector element to the second coupling part 8 of a second connector element, so to form a connecting assembly 1.
Next step in the method is to add a tubular construction member 9 over the plug shaped spring part 5 of a first connector element and over the interlinked coupling parts 7,8 of a connector assembly 1 so that the interlinked parts of the two connector elements are held by engagement friction of the plug shaped spring part 5 against the internal wall surface of the tubular construction member.
The two interlinked coupling parts 7,8 are due to the locking part of the pin 7 with at its end a part with an enlarged diameter and the similar but negatively shaped receiving space of the coupling part 8, which held together in a locked situation when coupled and placed within an open end of the tubular construction member 9.
In a following step a second tubular construction member 9 can be added to the spring part 5 of a second connector element: this spring part could for example have a clip or plug shape as shown in the figures and as described above.

If for example a connecting device 1 must be assembled for a least 3 elongated construction members as shown in the exploded view of figure 1b, the first step is to couple a first coupling part 7 of a first connector element 2B to a second coupling part 8 of a second, similar shaped connector element 2B.
The next step is to couple the first coupling part 7 of the second connector element to a second coupling part 8 of a third connector element 2B.
The last step is to couple the first coupling part 7 of a third connector element to the second coupling part 8 of the first connector element 2B.
The resulting connecting device 1 according to this method has a closed loop that is formed by all the interconnected couplings parts 7,8 of the three construction members and therefore has the star shape form as is shown in figures 1b.
As the flexible bridge parts 6 in figure 1b are bendable in all directions, the fingers of the star can be bended out of plane in any direction according to the wishes of the builder and the elongated construction members can be pushed over each of the spring parts 5 of the connector elements. The assembled connecting device 1 of Figure 1b can therefore be used for creating a corner of pyramid type of object, but also for corners or nodes of other type of geometric shapes like a tetrahedon, an octahedron, etc.
If for example the construction members 2A are used with rigid (fixed) bridge parts 6', then an assembled connecting device 1 can for example have the form of a 3 dimensional corner of a cube with the 3 plug shaped spring parts 5 each under 90 degrees at different axis (not shown). Therefore the invention is especially suited for adults, students and children as it allows them to form two and three dimensional objects of any size or shape while at the same time the invention can be used for technical educational and engineering modelling purposes, for example to create support objects, 2D or 3D geometric figures, decoration, art or freestyle objects, etc.

The claimed invention further covers a construction set for building two- or three-dimensional spatial objects with at least two elongated construction members 9 that comprises multiple connector elements 2A,2B, 3, 4, 11, 12,13,14,15 for assembling a connecting device 1 according to the invention.
The claimed invention also covers the method for assembling a connecting device 1 as well as any spatial object constructed with this method using the claimed connection devices assembled from the connector elements as described.

It should be appreciated by those skilled in the art that any drawings herein represent conceptual views of illustrative units or modules embodying the principles of the invention. Whilst the principles of the invention have been set out above in connection with specific embodiments, it is to be understood that this description is merely made by way of example and not as a limitation of the scope of protection which is determined by the appended claims. Although detailed embodiments of the present invention are disclosed herein, it is to be understood that these embodiments are merely exemplary of the invention, which can be embodied in various forms.

Therefore, specific structural and functional details disclosed herein are not to be interpreted as limiting, but merely as a basis for the claims and for teaching one skilled in the art to variously employ the present invention in virtually any appropriately detailed structure. In particular, features presented and described in separate dependent claims may be applied in combination and any advantageous combination of such claims is herewith disclosed.

### List of reference numbers:

- 1: Connecting device
- 2A: Embodiment of a plug shaped first connector element with fixed coupling part
- 2B: Embodiment of a plug shaped first connector element with flexible coupling part
- 3: Embodiment of a plug shaped first connector element with teethed racks
- 4: Embodiment of a clip shaped first connector element with flexible coupling part
- 5, 5', 5": Resilient spring part
- 6',6", 6"': Bridge part
- 7: First coupling part
- 8: Second coupling part
- 9: Elongated construction member
- 10: Longitudinal centreline
- 11: Embodiment of a clip shaped first connector element with a flexible part
- 12: Embodiment of a clip shaped second connector element with female coupling part
- 13: Embodiment of a clip shaped second connector element with a male coupling part
- 14: Embodiment of a clip shaped first connector element with ball coupling part
- 15: Embodiment of a clip shaped second connector element with a socket coupling part

## Claims

1. A modular connecting device (1) for building two- or three-dimensional spatial objects using elongated construction members (9), the connecting device (1) comprising at least a first connector element (2A, 2B, 3, 11, 14) and a second connector element (2A, 2B, 4, 12, 13, 15), both connector elements shaped for connecting to an exterior or an interior of a respective elongated construction member (9) and for keeping in position relative to the respective elongated construction member by friction,
**characterised in that**
- the first connector element (2A, 2B, 3, 11, 14) comprises a resilient first spring part (5) to connect to a first respective elongated member (9), a first coupling part (7,8) and a bridge part (6', 6",6"'), situated between the first spring part (5) and the first coupling part (7,8),
- the second connector element (2A, 2B, 4, 12, 13, 15) comprises a resilient second spring part (5) to connect to a second respective elongated member (9) and a second coupling part (7,8) shaped for detachable coupling to the first coupling part (7,8),
- a longitudinal axis of both the first and second coupling parts (7,8) being aligned with each other when coupled.

2. Modular connecting device (1) according claim 1, **characterised in that** the first coupling part (7) comprises an elongated pin shaped part that at one end is provided with a locking part with a diameter larger than a diameter of the elongated pin shaped part, and the second coupling part (8) comprises a hollow part shaped to receive and detachably hold the locking part of the first coupling part (7).

3. Modular connecting device according to claim 2, **characterised in that** the one end of the first coupling part is shaped like a ball and the second coupling part (8) is shaped like a socket, for forming a ball-socket coupling when the first coupling part is coupled with the second coupling part.

4. Modular connecting device (1) according to claim 1 or 2, **characterised in that** the second coupling part (8) comprises an open slot elongated along the longitudinal axis of the second coupling part with an U-shaped cross-section capable to receive and hold the first coupling part, the second coupling part (8) being arranged near/at an end of the spring part (5).

5. Modular connecting device (1) according to any one of the preceding claims, **characterised in that** the first connector element (2A, 2B) is provided with both the first and second coupling parts (7,8), the second coupling part (8) being arranged between the bridge part (6', 6", 6"') and the spring part (5).

6. Modular connecting device (1) according to any one of the preceding claims, **characterised in that** the bridge part (6", 6") is a flexible element capable of bending or deforming over at least 1 axis of the connecting device, in which the bridge part can be shaped as one selected from a group comprising at least a film pivot, a heat formed twisted film or an elongated bendable part.

7. Modular connecting device (1) according to any one of the preceding claims, **characterised in that** the resilient spring part (5) is in the form of a clip comprising a pair of clamping fingers (5',5") for detachably holding a construction member (9) between the fingers (5',5"), the fingers (5',5") capable of applying a clamping friction force on the outer surface of a construction member (9).

8. Modular connecting device (1) according to any one of the preceding claims, **characterised in that** the elongated construction member (9) is a hollow tube with at least one opening on an end thereof, and
at least one of the resilient spring parts (5) of the connection members (2A, 2B, 3, 4) has an elongated plug shape with an opening over the centreline (10), a first spring element (5') and a second spring element (5") both aligned in parallel with the longitudinal centreline (10) and compressible by hand towards the centreline (10), the spring elements (5',5") capable of applying an outward friction force against an internal surface of the hollow tube when the first and second spring elements are inserted in the opening at the end of the hollow tube.

9. Modular connecting device (1) according to claim 5 or 8, **characterised in that** the bridge part (6') of a first connector element (2A) is a rigid and fixed part that connects the pin shaped coupling part(7) and the resilient spring part (5) with the shape of an elongated plug, so that the axis of the pin shaped male coupling part (7) is perpendicular to the longitudinal centreline (10) of the first connector element (2A).

10. Modular connecting device (1) according to claim 8, **characterised in that** the sides of the first and second spring elements (5',5") of a spring part (5) are each provided with protrusions and recesses that form two racks that face each other and when not engaged, are displaceable (10) In axial direction along the centreline (10) with regard to each other, the first spring member (5') being connected via a first flexible bridge part (6") to the coupling part (7,8) and the second spring member (5") being connected via a second flexible part (6"') to the same coupling part (7,8) at a radial distance from the first flexible part (6").

11. Modular connecting device (1) according to any one of the proceeding claims, **characterised in that** the connecting device_comprises at least three identically shaped first connector elements (2B), each connector element comprising a female receiving coupling part (8), a pin-shaped male coupling part (7), a flexible part (6") and a plug shaped spring part (5), the male and female coupling parts (7,8) when coupled to each other, form a closed loop with the plug shaped spring part (5) of each connector element extending radially outwards, so that the connecting device (1) has a star-like shape.

12. Modular connecting device (1) according to any one of the preceding claims, **characterised in that** the connector elements (2A, 2B, 3, 4, 11, 12, 13, 14, 15) are made from a moulded resilient synthetic material, or more preferably made from Nylon, polyester, polypropylene, rubber, polyurethane or PVC plastic material.

13. Method for assembling a modular connecting device (1) according to any one of the preceding claims and connecting such connecting device (1) to two elongated tubular construction members (9),
comprising:
- coupling at least two connector elements (2A, 2B, 3, 4, 11, 12, 13) together by connecting the first coupling part (7) of a first connector element (2A, 2B, 3, 11) to the second coupling part (8) of a second connector element (2A, 2B, 4, 12, 13) so to form a connecting device (1) and
- adding a tubular construction member 9 over the plug shaped spring part (5) of the connector element (2A, 2B, 3, 4) and over the connected coupling parts (7,8) of the connecting device (1) so that the connected coupling parts (7,8) of the two connector elements (2A, 2B, 3, 4, 11, 12, 13), are hold and locked together within an open end of a tubular construction member (9),
- add a second tubular construction member (9) to the spring part (5) of the second connector element (2A, 2B, 3, 4, 11, 12, 13).

14. Method for assembling a modular connecting device (1) according any of the preceding claims for a construction set for building a spatial objects with at least 3 elongated construction members(9), comprising:
- connecting a first coupling part (7) of a first connector element (2B) to a second coupling part (8) of a second connector element (2B),
- connecting the first coupling part (7) of the second connector element (2B) to a second coupling part (8) of a third connector element (2B) and
- connecting the first coupling part (7) of a third connector element (2B) to the second coupling part (8) of the first connector element (2B), so that a closed loop is formed by all the connected couplings parts (7,8) of the at least 3 connector elements (2B)
- connect an elongated construction member (9) to each of the spring parts (5) of the connector elements (2B).

15. Construction set for building two- or three-dimensional spatial objects with at least two elongated construction members (9), comprising connector elements (2A, 2B, 3, 4, 11, 12, 13, 14, 15) for assembling a modular connecting device (1) according to any one of the claims 1-12, or for the method for assembling a connecting device (1) according to claim 13 or for building a spatial object according to claim 14.

16. Elongated construction member (9) for use with a modular connecting device (1) according to any one of the preceding claims 1- 12, **characterised in that** it is a hollow tube so dimensioned that the spring part (5) of a connector element (2A, 2B, 3, 4, 11, 12, 13, 14,15) can be held by friction on the exterior of the tube or be held by friction against the interior within an open end of the tube, the tube preferably made of aluminium material and provided with at least two flat longitudinal side surfaces opposite to each other.
